# EUROPEAN PATENT APPLICATION

(11) **EP 4 750 092 A1**
(43) Date of publication of application: **27.05.2026**
(21) Application number: 25216660.8
(22) Date of filing: 18.11.2025
(51) Int. Cl.: H04S 7/00

(54) **SYSTEM AND METHOD FOR INTERFACING WITH AUDIO PLAYBACK DEVICES**

(30) Priority: 26.11.2024 US 202418960846
(71) Applicant: Harman International Industries, Incorporated, Stamford, Connecticut 06901 (US)
(72) Inventor: HAYASHI, Naoki, Dexter, MI, 48130 (US); GINGERICH, Devin Allen, Walled Lake, MI, 48390 (US)
(74) Representative: Kraus & Lederer PartGmbB

(57) **Abstract**

An audio system is provided. The system includes a mobile device and a hub controller device. The mobile device transmits calibration data. The hub controller device receives an audio input signal indicative of desired audio to be played back in an establishment and processes the audio input signal based on the calibration data to generate an audio output signal for playback in the establishment. The hub controller device transmits the audio output signal to at least one of a wireless loudspeaker and wireless headphones to playback the audio output signal in the establishment and transmits the audio output signal, via a wired connection, to a hardwired based loudspeaker device to playback the audio output signal in the establishment.

## Description

### TECHNICAL FIELD

Aspects disclosed herein generally relate to a system and method for interfacing with controlling, configurating, and tuning audio playback devices. These aspects and others will be discussed in more detail herein.

### BACKGROUND

A number of consumers utilize any number of loudspeaker and headphone devices in a home setting. Most of the loudspeaker and headphone devices may be used independently from one another. In addition, any number of sources may be used to interface with such loudspeakers and headphone devices. However, prior art implementations fail to provide a user control device that can control, configure, tune, or otherwise interface various aspects related to the loudspeaker and headphone devices.

### SUMMARY

In at least one embodiment, an audio system is provided. The system includes a mobile device and a hub controller device. The mobile device transmits calibration data. The hub controller device receives an audio input signal indicative of desired audio to be played back in an establishment and processes the audio input signal based on the calibration data to generate an audio output signal for playback in the establishment. The hub controller device transmits the audio output signal to at least one of a wireless loudspeaker and wireless headphones to playback the audio output signal in the establishment and transmits the audio output signal, via a wired connection, to a hardwired based loudspeaker device to playback the audio output signal in the establishment.

In at least another embodiment, an audio system is provided. The system includes a mobile device and a hub controller device. The mobile device transmits a first command to initiate a calibration process for the audio system. The hub controller device transmits a test command to at least one of a wireless loudspeaker and wireless headphones to transmit a first audible test tone into an establishment in response to the first command. The hub controller device wiredly transmits the test command to a hardwired based loudspeaker device to transmit a second audible test tone into the establishment in response to the first command. The mobile device determines calibration data for the at least one of the wireless loudspeaker and the wireless headphone and the hardwired based loudspeaker device positioned in a room in the establishment based on the first audible test tone and the second audible test tone.

In at least another embodiment, a method is provided. The method includes receiving an audio input signal from a mobile device and processing, at a hub controller device, the audio input signal to generate an audio output signal for playback in an establishment. The method further includes transmitting the audio output signal to at least one of a wireless loudspeaker and wireless headphones to playback the audio output signal in the establishment; and transmitting the audio output signal, via a wired connection, to a hardwired based loudspeaker device to playback the audio output signal in the establishment.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
FIGURE 1 depicts a system for interfacing with audio playback devices in accordance with one or more embodiments;
FIGURE 2 depicts another system for interfacing with the audio playback devices in accordance with one or more embodiments;
FIGURE 3 depicts a method for performing a calibration process utilizing the systems of FIGUREs 1 and 2 in accordance with one or more embodiments;
FIGURES 4A - 4C depict aspects related to a main application room interface in accordance with one or more embodiments;
FIGURES 5A - 5C depict aspects related to a sub-menu for loudspeaker selection interface in accordance with one or more embodiments;
FIGURES 6A - 6C depict aspects related to a calibration process interface in accordance with one or more embodiments;
FIGURES 7A - 7C depict aspects related to a pairing multiple hub interface in accordance with one or more embodiments;
FIGURES 8A - 8C depict aspects related to a manage multiple hubs interface in accordance with one or more embodiments; and
FIGURES 9A- 9C depict aspects related to a manage headphones interface in accordance with one or more embodiments.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Aspects disclosed herein generally provides a mobile device that executes instructions to provide an application that enables users the ability to interface with a multimedia hub controller device. The mobile device and/or media hub controller device enables users to discover various audio playback devices. Such audio playback devices may include wireless loudspeakers, headphones (e.g., earbuds, etc.), and wiredly coupled audio related devices such as hardwired loudspeakers, televisions, bookshelf loudspeakers, etc. In one example, the mobile device and the audio playback devices may be operably coupled to one another via the hub controller device. The hub controller device may enable the mobile device and the various audio playback devices located in an establishment the ability to communication with another. It is recognized that the hub controller device may enable the mobile device to wirelessly communicate with all audio playback devices located within an establishment (e.g., home, residence, business, commercial establishment, etc.) irrespective of where such devices are located in the establishment. The mobile device may interface (e.g., control, configure, tuning, etc.) with the audio playback device via a wireless protocol (e.g., Bluetooth or other wireless protocol) and arrange such devices visually in a simulated room to create a surround sound system for a room in the establishment.

The mobile device may provide any number of user interfaces (or displays) to guide users to set up their respective entertainment hub and to connect compatible wireless loudspeakers to the media hub controller. Once the audio playback device(s) are connected to the media hub controller, the user may be able to visually place their audio playback devices such as the loudspeakers in a simulated room on a user interface of the mobile device to create their surround sound system. The mobile device may allow for the addition and removal of loudspeakers after an initial setup as well as repositioning existing loudspeakers to create a new surround sound profile.

The disclosed system and/or method enables an end user the ability to connect multiple types of loudspeakers and headphones together to create a custom surround sound system with fully wireless, for example, Bluetooth loudspeakers and/or headphones. The disclosed system and/or method may also allow for the modification and expansion of surround sound system in the future. The disclosed system and/or method may create opportunities and demand for multiple purchases if the same type of loudspeaker creates symmetrical pairs.

The disclosed system and method may for similar or different loudspeakers optimize and suggest loudspeaker layouts and pairing to optimize the end user experience. In general, the mobile device may serve as an interface with a hub controller device to transmit instructions and user configurations to the hub controller. In some instances, the mobile device may not transmit an audio input signal for playback to the hub controller device. However, in other instances, it is recognized that the mobile device may transmit an audio input signal to the hub controller device. In this case, the hub controller device may process and/or transmit the audio input signal and transmit the same to the various audio playback devices for playback in one or more rooms of an establishment. These aspects and others will be discussed in more detail herein.

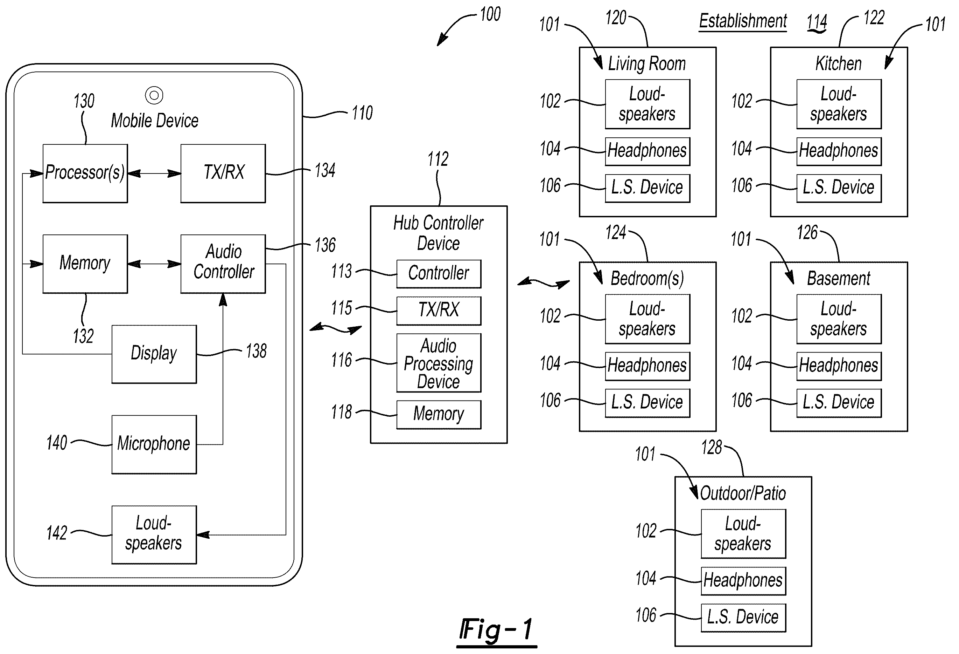

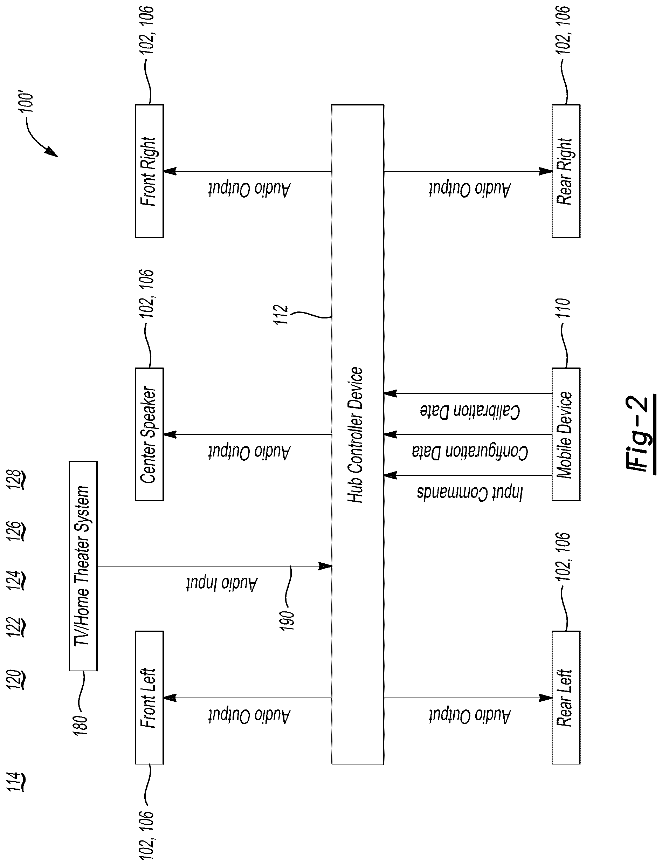

FIGURE 1 depicts a system 100 for interfacing with audio playback devices 101 (e.g., wireless loudspeakers 102, wireless headphones 104, and hardwired loudspeakers 106) in accordance with one or more embodiments. The system 100 includes a mobile device 110 and a hub controller device 112. The mobile device 110 and the hub controller device 112 may be positioned in an establishment 114. The establishment 114 may be any a dwelling, residence, commercial facility, etc. In general, the establishment 114 may include any number of the audio playback devices 101. In one example, the mobile device 110 may wirelessly transmit any number of signals or data to the hub controller device 112. For example, the mobile device 110 may wirelessly transmit user configuration signals such as input commands, configuration data, and/or calibration data to the hub controller device 112. The user configuration signals will be discussed in more detail below. The user configuration signal generally provides information about the various audio playback devices 101 as positioned throughout the establishment 114 to the hub controller device 112 so that the hub controller device 112 has information about such devices 101 that are operably coupled thereto. These aspects will be discussed further in connection with FIGURE 2. It is recognized in one example, that the mobile device 110 may not transmit actual audio data to the hub controller device 112 for the various audio playback devices 101 to play back the audio data in the establishment. In this case, the mobile device 110 may transmit only the user configuration signals to the hub controller device 112.

In another example, the mobile device 110 may transmit audio data to the hub controller device 112 for the audio playback devices 101 to playback such audio data in the establishment 114. For example, the mobile device 110 may wirelessly transmit an audio input signal to the hub controller device 112. In turn, the hub controller device 112 may process the audio input signal to generate an audio output signal. The hub controller device 112 may then transmit the audio output signal to the audio playback devices 101 to playback the audio output signal in the establishment for a user. In general, the audio playback devices 101 may correspond to any number of wireless or connected loudspeakers 102, wireless or connected headphones 104, and hardwired based only (or analog input or digital input only) loudspeaker devices 106 (e.g., televisions, sound bars, loudspeaker, etc.) that include physical input channels (PIC). The hardwired based loudspeaker devices 106 may not be capable of communicating with the mobile device 110.

The hardware-based (or hard-wired based) loudspeaker devices 106 may be referred to hereafter as loudspeaker devices 106. The hub controller device 112 may transmit, via a wired connection, the audio output signal to the loudspeaker devices 106. The loudspeaker devices 106 may then playback the audio output signal via channels such as center, front right, front left and rear surround. The mobile device 110 may wirelessly transmit the audio input signal to the hub controller device 112 via any number of wireless communication protocols (e.g., Bluetooth, etc.). In addition, the hub controller device 112 may wirelessly transmit the audio output signal to the loudspeakers 102 and/or the headphones 104 via any number of wireless communication protocols (e.g., Bluetooth, etc.). In one example, it is recognized that the mobile device 110 may not communicate directly with the loudspeakers 102, the headphones 104 and/or the loudspeaker devices 106. Rather, the mobile device 110 may communicate directly with the hub controller device 112 which in turn communicates directly with the loudspeakers 102, the headphones 104, and/or the loudspeaker devices 106.

Turning back to the establishment 114, assuming that the establishment 114 corresponds to a residence, the establishment 114 may include a living room 120, a kitchen 122, one or more bedrooms 124 (hereafter "bedroom 124), a basement 126, and an outdoor patio 128. Thus, in this regard, each of the living room 120, the kitchen 122, the bedroom 124, the basement 126, and the outdoor patio 128 may include the loudspeakers 102 and/or the headphones 104. In operation, the mobile device 110 way wirelessly transmit an audio input signal to any of the loudspeakers 102 and/or the headphones 104 when the mobile device 110 is positioned within a predetermined distance of such devices in the establishment 114. Each of the loudspeakers 102 and/or the headphones 104 may receive the audio input signal, process the same, and playback an audio output signal for one or more users in at least one of the living room 120, the kitchen 122, the bedroom 124, the basement 126, and the outdoor patio 128. It is recognized that the mobile device 110 may be paired to one or more of the various loudspeakers 102 and/or headphones 104 positioned in the establishment.

The hub controller device 112 may include a controller 113, a transceiver 115, an audio processing device 116, and a memory device 118. The loudspeaker devices 106 may each be wiredly connected to the hub controller device 112. The hub controller device 112 is capable of providing information to the loudspeaker device 106 for the mobile device 110. In addition, the hub controller device 112 may be coupled with (or paired to) the loudspeakers 102 and/or the headphones 104 in a wireless format (or wireless protocol) where these devices communicate with one another via a wireless protocol such as, for example, Bluetooth, etc. The controller 113 of the hub controller device 112 may process the information and wirelessly transmit the same to the mobile device 110 via the transceiver 115.

In addition, the mobile device 110 may also wirelessly transmit information to the hub controller device 112 such that the hub controller device 112 may wiredly provide this information to the loudspeaker 106. For example, the mobile device 110 may wireless transmit audio data to the hub controller device 112. The audio processing device 116 may process the audio data as received from the mobile device 110 by performing signal processing and equalization to transmit each individual channel output (e.g., center, front left, front right, and rear sound) to the various loudspeaker device 106 in the establishment 114 for audio playback. Similarly, the audio processing device 116 of the hub controller device 112 may process the audio data received from the mobile device 110 by performing signal processing and equalization to wirelessly transmit the same to the loudspeakers 102 and/or the headphone 104 in the establishment 114. The memory device 118 may store instructions that are executable by the controller 113 and/or the audio processing device 116 to execute any of the functions noted herein.

The mobile device 110 may include at least one processor 130 (the processor 130), a memory device 132, a transceiver 134, an audio controller 136, a display 138, one or more microphones 140, and one or more loudspeakers 142. The processor 130 generally co-acts with instructions or data stored on the memory device 132 to perform any of the noted operations disclosed herein. Audio data may be stored on the memory device 132 and provided to the audio controller 136 and stored on the memory device 132. The mobile device 110 may receive audio from an external server via WIFI or other connection. The mobile device 110 may store audio data on the memory device 132. The memory device 132 may provide the audio data to the audio controller 136 to perform processing on the same. The processor 130 may provide the audio information provided by the memory device 132 and the audio controller 136 to the transceiver 134. The transceiver 134 of the mobile device 110 may wirelessly transmit an audio input signal to hub controller device 112 located in the establishment 114. The audio input signal generally corresponds to the desired audio to be played back by any one or more of the loudspeakers 102, the headphones 104, and or the loudspeaker devices 106 in the establishment 114. Similarly, the transceiver 134 of the mobile device 110 may also wirelessly transmit the audio input signal to the hub controller device 112 where such information is received by the transceiver 134 thereof. The audio controller 136 may process this information and hardwire transmit the information as an individual channel output (e.g., center, front left, front right, and rear sound) to the various loudspeaker devices 106 in the establishment 114 for audio playback.

The hub controller device 112 processes the audio input signal to achieve an optimal listening experience for the loudspeakers 102, headphones 104, and loudspeaker devices 106. For example, the hub controller device 112 processes audio information on the audio input signal provided by the mobile device 110 in accordance with the manner in which the various loudspeakers 102 are arranged in the establishment 114 and defined by the user via the mobile device 110. In particular, the user may designate the location (or layout) of the loudspeakers 102 in any one or more of the rooms 120, 122, 124, 126 of the establishment 114 via the mobile device 110. Similarly, the user may also define or specify which of the loudspeaker 102 corresponds to a center loudspeaker, a front left loudspeaker, a front right loudspeaker, and rear right loudspeaker, and a rear left loudspeaker via the mobile device. Specifically, the mobile device 110 may provide this information to the hub controller device 112. In turn, the hub controller device 112 may process the audio input signal for playback at the loudspeakers 102 and/or the headphones 104 in the manner specified by the user to achieve the optimal listening experience for the user.

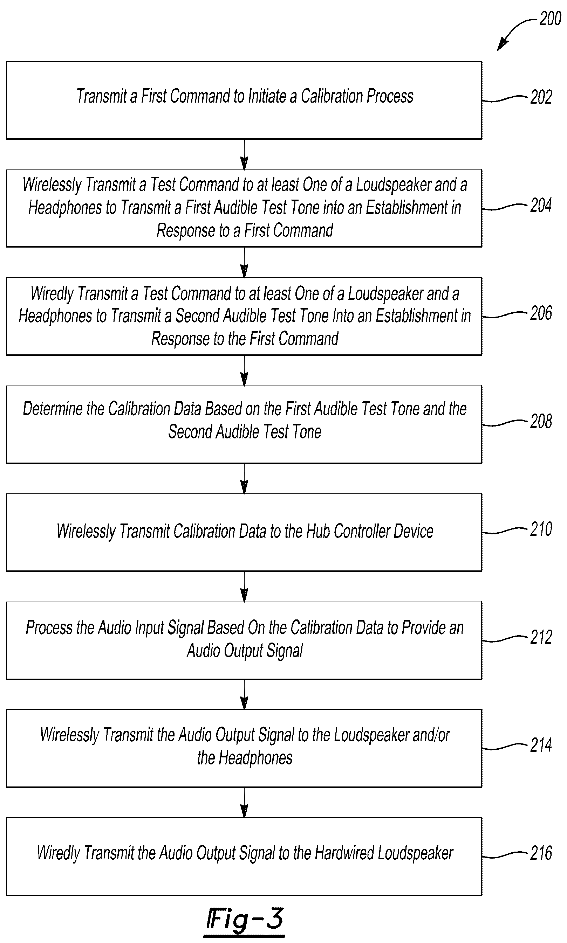

In general, the hub controller device 112 does not know the location or designation of the various loudspeakers 102 as located throughout the establishment 114 and relies on the user, via the mobile device 110, to provide such information to the hub controller device 112. Similarly, the hub controller device 112 does not know the location or designation of the loudspeaker device 106 as located throughout the establishment 114. The hub controller device 112 relies on the user, via the mobile device 110, to provide such information to the hub controller device 112. In general, the mobile device 110 enables the user the ability to drag and drop the placement of the various audio playback devices 101 in the virtual space corresponding to the establishment 114. The mobile device 110 enables the user with the ability to add and remove the loudspeakers 102, the headphones 104, and/or the hardwired loudspeaker devices 106 in the virtual space that corresponds to the establishment 114. After a loudspeaker 102, headphones, and/or hardwired loudspeaker 106 is added in the virtual space corresponding to the environment 115, the user may designate a particular loudspeaker type from a drop-down menu as set forth in FIGURE 3C. Once information is provided to the hub controller device 112 from the mobile device 110, the hub controller device 112 stores such information in the memory 118. The hub controller device 112 may include various audio algorithms that, once executed, utilize the loudspeaker type, placement/location, etc. (e.g., information provided by the mobile device 110) to send the appropriate audio stream to each wired or wirelessly connected audio playback device 101.

The mobile device 110 and the hub controller device 112 may engage in a calibration process. This generally entails that a user may send a first command (or control signal) via the mobile device 110 to the hub controller device 112. In this case, upon receiving the first command, the hub controller device 112 transmits a test command to the various loudspeakers 102 and/or the loudspeaker devices 106 in the establishment 114. In response to receiving the test command, the loudspeakers 102 and/or the loudspeaker devices 106 transmit an audible test tone that is picked up or received by the microphones 140 of the mobile device 110. From there, the mobile device 110 may measure time delays between the test tones transmitted by the various loudspeakers 102 and/or the loudspeaker devices 106 in the particular room in which the mobile device 110 is positioned in the establishment 114.

In addition, the mobile device 110 may also ascertain the frequency response for each of the loudspeakers 102 and/or the loudspeaker devices 106 based on the transmitted test tones. The mobile device 110 may then transmit the determined time delays and frequency responses to the hub controller device 112. In turn, the hub controller device 112 processes the time delays and the frequency responses to provide the optimal listening experience for the user based on the configuration of the loudspeakers 102 in a given room of the establishment and further based on the location of the user where the mobile device 110 receives the test tones. In general, the mobile device 110 may serve as a feedback mechanism for the hub controller device 112 and provide acoustic or acoustic measurement related information for a given room (or hub) 120, 122, 124, 126, and 128 to the hub controller device 112.

FIGURE 2 depicts another system 100' for interfacing with the audio playback devices 101 in accordance with one or more embodiments. The system 100' includes similar features as noted in connection with the system 100 of FIGURE 1. However, the system 100' is generally configured such that the mobile device 110 interfaces with the hub controller device 112 but the mobile device 110 may not serve as an audio source. In particular, the mobile device 110 may wirelessly transmit user configuration signals such as input commands, configuration data, and/or calibration data to the hub controller device 112. The input commands may correspond to drop/down menu options, a calibration process start button command, adding available hubs to a group, managing hub groups such as adding or removing hubs, and adding/removing loudspeakers in a virtual room visualization. These commands may be illustrated in the various screen interfaces below. The configuration data may correspond to a loudspeaker position (e.g., as visualized in a user interface on the mobile device 110, a connect loudspeaker list, and selected equalization personalization. The calibration data may correspond to an audio delay (e.g., time of measurement data) between loudspeakers 102, 106, sound pressure level (SPL) data (e.g., volume measurement data), and equalization data (e.g., frequency sweep measurements data). The calibration data may be generated by the mobile device 110 and transmitted to the hub controller device 112 as part of the calibration process. The hub controller device 112 may generate the audio output signal for playback in the establishment 114 based on the calibration data.

The system 100' includes an audio source 180 that may be a television or other device within a theater system that provides the audio input signal 190 to the hub controller device 112. In turn, the hub controller device 112 transmits an audio output signal to the loudspeakers 102 and/or the headphones 104 in addition to the hardwired loudspeakers 106 in any of the rooms 120, 122, 124, 126, 128 in the establishment 114. It is recognized that the mobile device 118 may provide the user configuration signals in the system 100 as illustrated in connection with FIGURE 1 while also providing the audio input signal.

FIGURE 3 depict a method for performing the calibration process for the system 100 and the system 100' in accordance with one or more embodiments.

In operation 202, the mobile device 110 transmits a first command to the hub controller device 112 to initiate the calibration process. In operation 204, the hub controller device 112 wirelessly transmits a test command to at least one of the loudspeakers 102 or the headphone 104 such that the at least one of the loudspeakers 102 or the headphones 104 transmit a first audible signal into a room(s) in the establishment 114. In operation 206, the hub controller device 112 wiredly transmits a test command to the hardwired based loudspeaker 106 such that the hardwired based loudspeaker 106 transmits a second audible signal into a room(s) in the establishment 114.

In operation 208, the mobile device 110 determines calibration data an audio delay (e.g., time of measurement data) between loudspeakers 102, 106, sound pressure level (SPL) data (e.g., volume measurement data), and equalization data (e.g., frequency sweep measurements data) in response to (or based on) the first audible signal and the second audible signal.

In operation 210, the mobile device 110 wirelessly transmits the calibration data to the hub controller device 112. In operation 212, the hub controller device 112 processes the audio input signal (e.g., as received by the mobile device 110 or received by a different audio source positioned in the establishment 114) based on the calibration data.

In operation 214, the hub controller device 112 wirelessly transmits the audio output signal to the loudspeaker 102 and/or the headphones 104 for playback in the room(s) in the establishment 114. In operation 216, the hub controller device 112 wiredly transmits the audio output signal to the hardwired loudspeaker 106 for playback in the room(s) in the establishment 114.

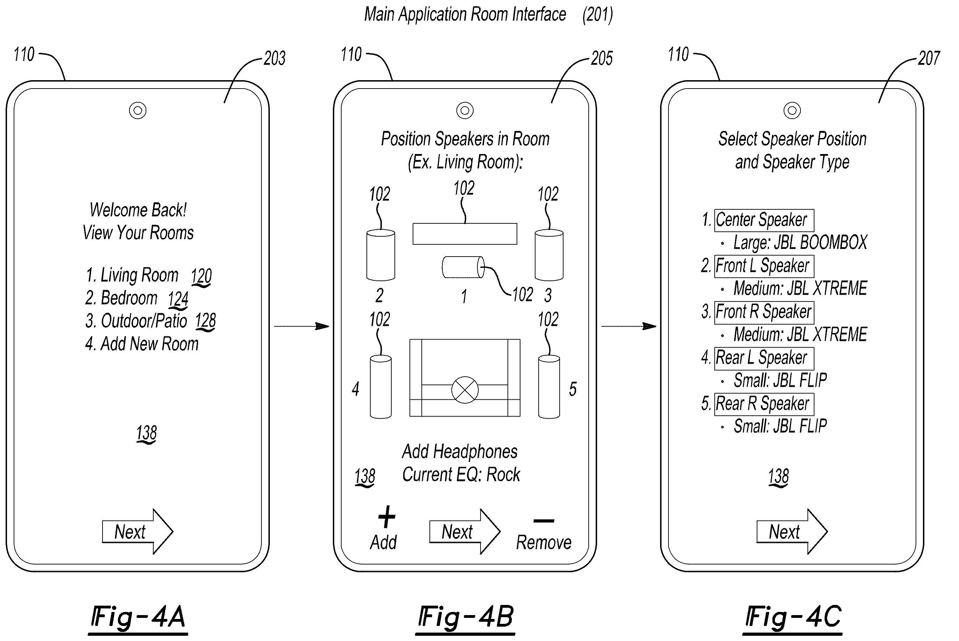

FIGURES 4A - 4C depict aspects related to a main application room interface 201 in accordance with one or more embodiments. FIGURE 4A generally illustrates a first screen 203 of the main application room interface 200 as depicted on the display 138 of the mobile device. For example, the first screen 203 provides a welcome back prompt and identifies the living room 120, the bedroom 124, and the outdoor/patio 128 of the establishment 114 thereon. The first screen 203 also enables the user to add a new room.

FIGURE 4B generally illustrates a second screen 205 of the main application room interface 200 as depicted on the display 138. The second screen 205 illustrates the positioning of the various loudspeakers 102 in the living room 120. In this case, it is recognized that the user selected the living room 120 from the first screen 203 to enter into the second screen 205.

FIGURE 4C generally illustrates a third screen 207 of the main application room interface 201 as depicted on the display 138. The third screen 207 enables the user to select the loudspeaker position and loudspeaker type. As shown, the user may assign the type, brand, and size of the loudspeaker 102 as either a center speaker, front left loudspeaker, front right loudspeaker, rear right loudspeaker, and a rear right loudspeaker via the mobile device 110. In general, information related to the layout of the loudspeakers 102 and/or loudspeaker devices 106 in a given room of the establishment 114 and the loudspeaker type is entered by the user into the mobile device 110.

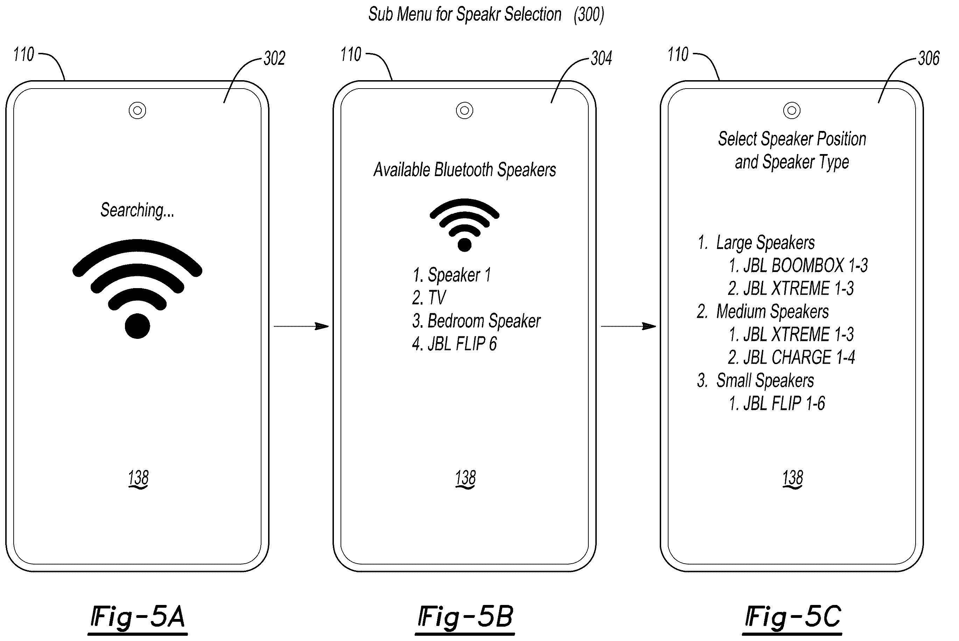

FIGURES 5A - 5C depict aspects related to sub-menu for loudspeaker selection interface 300 in accordance with one or more embodiments. FIGURE 5A generally illustrates a first screen 302 of the sub-menu for loudspeaker selection interface 300 as depicted on the display 138. The first screen 302 illustrates that the mobile device 110 is searching for the available loudspeakers 102 that are wireless.

FIGURE 5B generally illustrates a second screen 304 for a sub-menu for loudspeaker selection interface 300 as positioned on the display 138 of the mobile device 110 in accordance with one or more embodiments. The second screen 304 illustrates the available devices (e.g., loudspeaker 102) that have wireless capability. FIGURE 5C generally illustrates a third screen 306 for a sub-menu for loudspeaker selection interface 300 as positioned on the display 138 of the mobile device 110 in accordance with one or more embodiments. The third screen 304 illustrates a drop-down list of loudspeakers 102 that are wireless based on the size of the loudspeakers. As noted, in one example, the hub controller device 112 may be wirelessly coupled to the loudspeakers 102 and the headphones 104 while being wiredly coupled to the hardware-based loudspeakers 106. Thus, in this regard, the mobile device 110 may not be searching to connect to the loudspeakers 102 and/or the headphones 104. The mobile device 110, in one example, may only be interfacing with the hub controller device 112 to provide the information noted in connection with FIGURE 2 and the information noted in FIGURE 4A - 4C, 5A - 5C, 6A - 6C, 7A - 7C, 8A - 8C and 9A - 9C. In general, the hub controller device 112 may not have a physical or visual interface to provide the information directly without the mobile device 110.

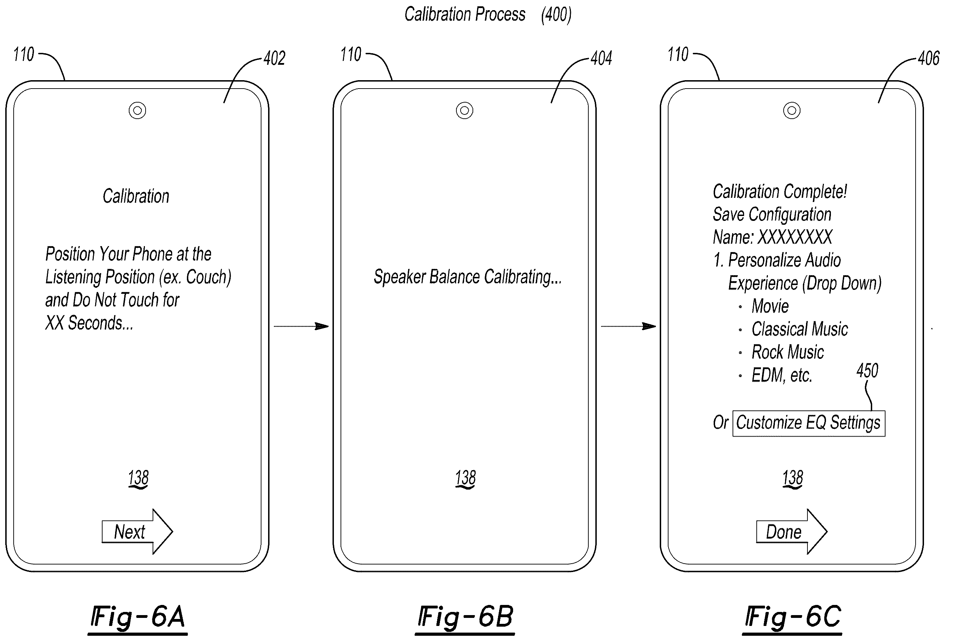

FIGURES 6A - 6C depict aspects related to a calibration process interface 400 in accordance with one or more embodiments. FIGURE 6A generally illustrate a first screen 402 of the calibration process interface 400 as positioned on the display 138 of the mobile device 110 in accordance with one or more embodiments. The first screen 402 provides a prompt to position the user's mobile device 110 at a listening position.

FIGURE 6B generally illustrates a second screen 402 of the calibration process interface 400 as positioned on the display 138 of the mobile device 110 in accordance with one or more embodiments. The second screen 404 notifies the user that a loudspeaker 102 is undergoing a balance calibration operation. FIGURE 6C generally illustrates a third screen 406 of the calibration process interface 400 as positioned on the display 138 of the mobile device 110 in accordance with one or more embodiments. The third screen 406 notifies the user that the calibration is complete and also provides a drop-down menu of personalized audio experience options. The mobile device 110 also provides an equalization settings selection field 450 where the user can select his/her personalized equalization parameters that may also be transmitted from the mobile device 110 to the hub controller device 112.

In general, the first screen 402 enables the user to transmit the first command to the hub controller device 112 such that the hub controller device 112 commands the loudspeakers 102 and/or the loudspeaker devices 106 of the multimedia devices to generate and transmit the test tones. As noted above, the mobile device 110 captures the test tones and determines the time delays and frequency response for each of the loudspeakers 102 and/or the loudspeaker devices 106 in a corresponding room of the establishment 114. The mobile device 110 may then transmit the measured time delays and frequency response to the hub controller device 112. The hub controller device 112 may then apply account for the time delays and the frequency response while processing the audio that is to be played back by the various loudspeakers 102 and/or the loudspeaker devices 106 for a given room in the establishment 114. These operations may occur when the second screen 404 and the third screen 46 are present and displayed to the user.

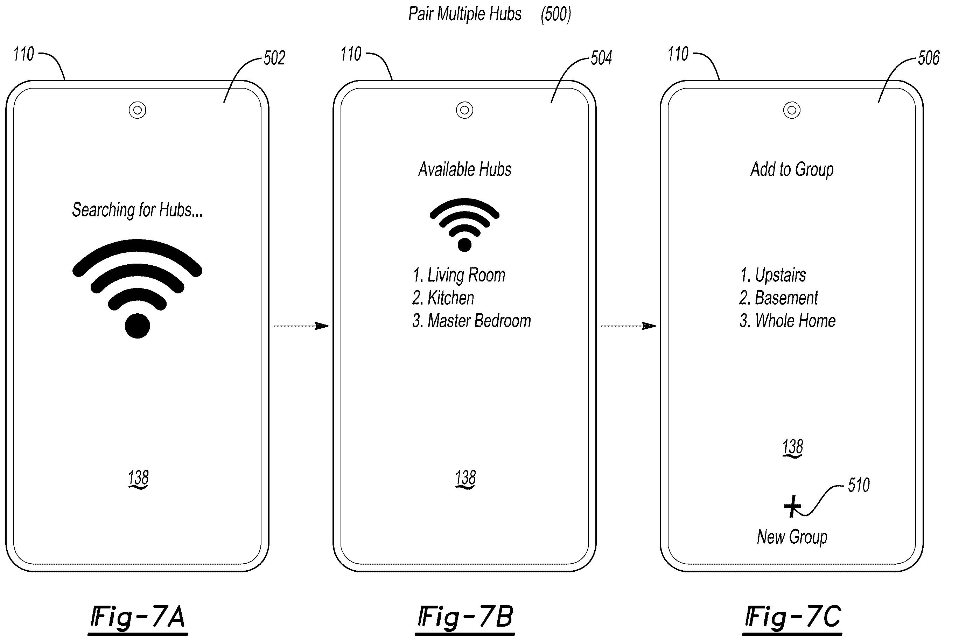

FIGURES 7A - 7C depict aspects related to a pair multiple hubs interface 500 in accordance with one or more embodiments. FIGURE 7A generally illustrates a first screen 502 of the pair multiple hubs interface 500 as positioned on the display 138 of the mobile device 110 in accordance with one or more embodiments. The first screen 502 notifies the user that the mobile device 110 is searching for hubs.

FIGURE 7B generally illustrates a second screen 504 of the pair multiple hubs interface 500 as positioned on the display 138 of the mobile device 110 in accordance with one or more embodiments. The second screen 504 displays which hubs (e.g., rooms in the establishment 114) are available. FIGURE 7C generally illustrates a third screen 506 of the pair multiple hubs interface 500 as positioned on the display 138 of the mobile device 110 in accordance with one or more embodiments. The third screen 506 illustrates which hub can be added via selection field 510 to the discovered hubs as shown in the second screen 504.

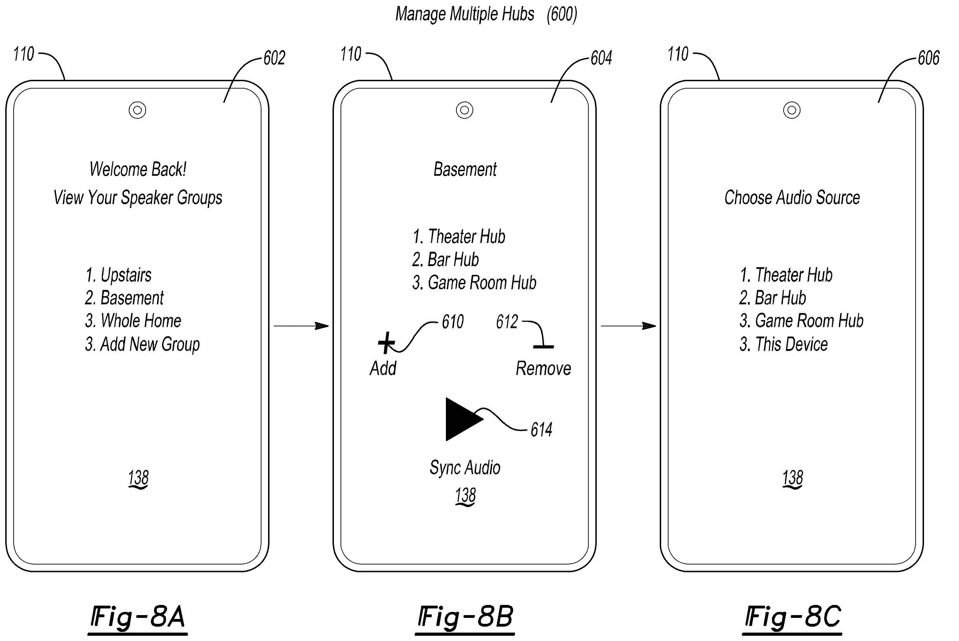

FIGURES 8A - 8C depict aspects related to a manage multiple hubs interface 600 in accordance with one or more embodiments. FIGURE 8A generally illustrates a first screen 602 of the manage multiple hubs interface 600 as positioned on the display 138 of the mobile device 110 in accordance with one or more embodiments. The first screen 602 illustrates various loudspeaker groups. In this case, the groups may correspond to loudspeakers 102, headphones 104, and or the loudspeaker devices 106 that are positioned in one or more rooms in the establishment 114. For example, the user may create a loudspeaker for the entire upstairs level of the establishment 114 which may include multiple rooms in the upstairs level.

FIGURE 8B generally illustrates a second screen 604 of the manage multiple hubs interface 600 as positioned on the display 138 of the mobile device 110 in accordance with one or more embodiments. The second screen 604 displays various hubs that have been established or stored for the basement. The second screen 604 includes add switch 610, a remove switch 612, and a sync audio switch 614. The user can add additional hubs to the basement by selecting the add switch 610. The user can remove hubs to the basement by selecting the remove switch 612. The sync audio switch 614 may correspond to a command that is transmitted to multiple hubs, potentially in multiple rooms to play from the same audio source.

FIGURE 8C generally illustrates a third screen 606 of the manage multiple hubs interface 600 as positioned on the display 138 of the mobile device 110 in accordance with one or more embodiments. The third screen 606 allows the user to select the audio source. The third screen enables the user to select which hub device within a hub group should be used as a main or primary audio source for all connected hub devices (or all connected audio playback devices 101) after the sync audio switch 614 is selected.

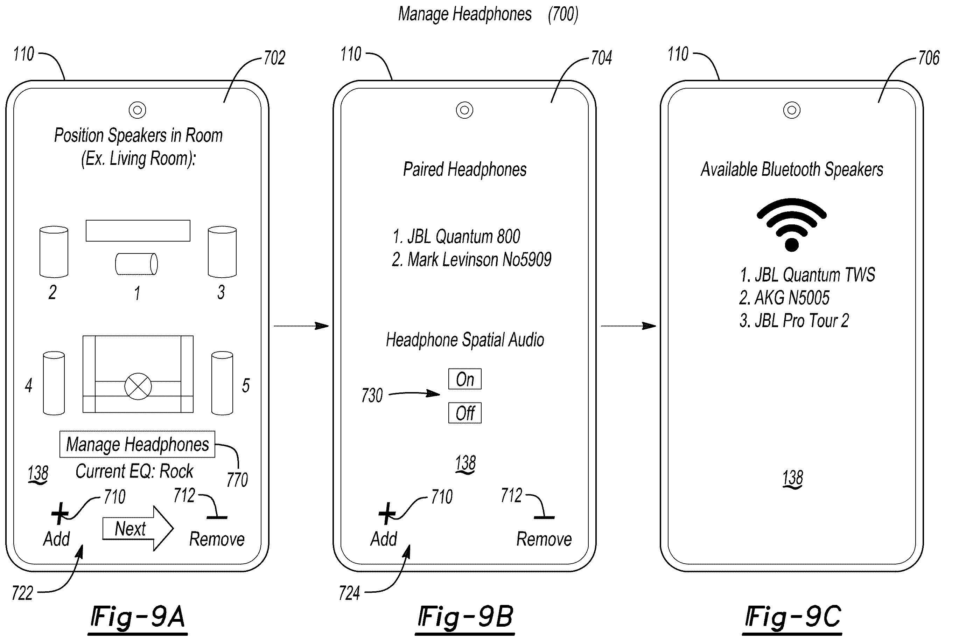

FIGURES 9A - 9C depict aspects related to a manage headphones interface 700 in accordance with one or more embodiments. FIGURE 9A generally illustrates a first screen 702 of the manage headphones interface 700 as positioned on the display 138 of the mobile device 110 in accordance with one or more embodiments. The first screen 702 illustrates various loudspeakers 102 as positioned in a corresponding room. The first screen includes an add switch 710, a remove switch 712, and a manage headphones switch 720. The add switch 710 enables the user to add a new set of headphones 104 to the currently selected hub. The user may select the manage headphones switch 720 to access a second screen 704.

FIGURE 9B generally illustrates the second screen 704 of the manage headphones interface 700 as positioned on the display 138 of the mobile device 110 in accordance with one or more embodiments. The second screen 604 displays currently paired headphone. The second screen includes the add switch 710, the remove switch 712 and a headphone spatial audio switch 730. The user may select the add switch 710 to add headphones 104 or the remove switch 712 to remove headphones from the second screen 704. In general, if one of the connected headphones 104, has spatial audio capabilities, then this menu may appear to allow the user to enable/disable that feature on the headphones 104.

FIGURE 9C generally illustrates a third screen 706 of the manage headphones interface 700 as positioned on the display 138 of the mobile device 110 in accordance with one or more embodiments. The third screen 706 illustrates the available headphones 104 that may be added as a paired headphones to the mobile device 110. In this case, the mobile device 110 may notify the hub controller device 112 of the headphones that are either added or removed. The mobile device 110 may configure the hub controller device 112 with information pertaining to the one or more of the loudspeakers 102, the headphones 104, and/or the hardware-based loudspeaker devices 106 in any room within the environment 114. For example, the mobile device 110 may provide any number of user interfaces (or displays) to guide users to set up their respective entertainment hub and to connect compatible wireless loudspeakers to the hub controller device 112. Once the audio playback device(s) 101 are connected to the hub controller device 112, the user may be able to visually place their audio playback devices 101 such as the loudspeakers 102, the headphones 104, and the hardware-based loudspeakers 106 in a simulated room on a user interface of the mobile device 110 to create their surround sound system. The mobile device 110 may allow, among other things, for the addition and removal of loudspeakers 102, 106 after an initial setup as well as repositioning existing loudspeakers to create a new surround sound profile. The mobile device 110 may also assign various center, front left loudspeakers, front right loudspeakers, rear right loudspeakers, and rear left loudspeakers based on their respective brand and manufacturer type.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilizes one or more microprocessors to execute a computer- program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. An audio system comprising:
a mobile device programmed to transmit calibration data; and
a hub controller device programmed to:
receive an audio input signal indicative of desired audio to be played back in an establishment;
process the audio input signal based on the calibration data to generate an audio output signal for playback in the establishment;
transmit the audio output signal to at least one of a wireless loudspeaker and wireless headphones to playback the audio output signal in the establishment; and
transmit the audio output signal, via a wired connection, to a hardwired based loudspeaker device to playback the audio output signal in the establishment.

2. The audio system of claim 1, wherein the mobile device is further programmed to transmit a first command to the hub controller device to initiate a calibration process.

3. The audio system of claim 2, wherein the hub controller device is further programmed to control the at least one of the wireless loudspeaker and the wireless headphones to transmit a first audible test tone into the establishment in response to the first command.

4. The audio system of claim 3, wherein the hub controller device is further programmed to control, via the wired connection, the hardwired based loudspeaker device to transmit a second audible test tone into the establishment in response to the first command.

5. The audio system of claim 4, wherein the mobile device includes one or more microphones to receive the first audible test tone and the second audible test tone.

6. The audio system of claim 5, wherein the mobile device is further programed to generate the calibration data for a room in the establishment based on the first audible test tone and the second audible test tone.

7. The audio system of claim 6, wherein the mobile device is further programmed to wirelessly transmit the including the calibration data for the room in the establishment to the hub controller device and preferably the hub controller device is further programmed to wirelessly transmit the audio output signal to the at least one of the wireless loudspeaker and the wireless headphones and to transmit, via the wired connection, the audio output signal to the hardwired based loudspeaker device to playback the audio output signal in the establishment based on the calibration data.

8. The audio system any preceding claim, wherein the mobile device is further programmed to generate a layout of a room of the establishment and to receive a user input that identifies a location of the at least one of the wireless loudspeaker and the wireless headphones, and the location of the hardwired based loudspeaker device in the layout of the room of the establishment.

9. A method comprising:
receiving an audio input signal;
processing, at a hub controller device, the audio input signal to generate an audio output signal for playback in an establishment;
transmitting the audio output signal to at least one of a wireless loudspeaker and wireless headphones to playback the audio output signal in the establishment; and
transmitting the audio output signal, via a wired connection, to a hardwired based loudspeaker device to playback the audio output signal in the establishment.

10. The method of claim 9 further comprising receiving a first command, at the hub controller device, to initiate a calibration process.

11. The method of claim 10 further comprising transmitting a test command to control the at least one of the wireless loudspeaker and the wireless headphones to transmit a first audible test tone into the establishment based on the first command.

12. The method of claim 11 further comprising wiredly transmitting the test command to control the hardwired based loudspeaker device to transmit a second audible test tone into the establishment in response to the first command.

13. The method of claim 12 further comprising receiving the first audible test tone from the at least one of the wireless loudspeaker and the wireless headphone and the second audible test tone from the hardwired based loudspeaker at a mobile device.

14. The method of claim 13 further comprising determining calibration data including at least one of an audio delay, volume measurement data, and equalization data for the at least one of the wireless loudspeaker and the wireless headphone and the hardwired based loudspeaker device positioned in a room in the establishment based on the first audible test tone and the second audible test tone.

15. The method of claim 14 further comprising wirelessly transmitting, from the mobile device, the calibration data for the room in the establishment to the hub controller device, and preferably further comprising:
transmitting, from the hub controller device, the audio output signal to the at least one of the wireless loudspeaker and the wireless headphones based on the calibration data; and
wiredly transmitting, from the hub controller device, the audio output signal to the hardwired based loudspeaker device to playback the audio output signal in the establishment based on the calibration data.
